# EUROPEAN PATENT SPECIFICATION

(11) **EP 1 519 843 B1**
(45) Date of publication and mention of the grant of the patent: **29.10.2008**
(21) Application number: 02749292.5
(22) Date of filing: 09.07.2002
(51) Int. Cl.: B60C 23/04, B60C 23/06

(54) **METHOD FOR INSTALLING A DEVICE ONTO THE INNER SURFACE OF A TYRE AND INSTALLATION KIT**
VERFAHREN UND BAUSATZ ZUR MONTAGE EINES SENSORS AUF DER REIFENINNENSEITE
PROCEDE D'INSTALLATION D'UN DISPOSITIF SUR LA SURFACE INTERNE D'UN PNEU, ET KIT D'INSTALLATION

(43) Date of publication of application: 06.04.2005
(73) Proprietor: Pirelli Tyre S.p.A., 20126 Milano (IT)
(72) Inventor: MANCOSU, Federico, I-20135 Milano (IT); NAHMIAS NANNI, Marco, I-20121 Milano (IT); SERRA, Antonio, I-16138 Genova (IT); TALDO, Andrea, I-20099 Sesto San Giovanni Milano (IT)
(74) Representative: Bottero, Claudio
(86) International application number: PCT/IT2002/000447
(87) International publication number: WO 2004/005053

(56) References cited:
- EP-A- 1 006 010
- US-A- 5 562 787

## Description

The present invention relates to a method for installing a device for measuring at least one characteristic parameter of a tyre, for example a device which includes a pressure or temperature sensor, onto the inner surface of a tyre, and to the installation kit used for this purpose.

As is known, a wheel of a motor vehicle comprises a rim, connected mechanically to the steering means with which the vehicle is provided, and a tyre fitted on the rim. The principal function of the wheel is to provide a pneumatic support for the vehicle and its load and to ensure, by means of the tyre, appropriate behaviour on the road. The vehicle is supported by the volume of pressurized air contained within the wheel.

A tyre comprises an internally hollow toroidal structure formed by a plurality of components, primarily by a textile or metallic casing ply having its ends associated with at least a pair of annular reinforcing cores called bead wires, inserted in two beads, each of which is formed along an inner circumferential edge of the casing for fixing the tyre to the corresponding rim of the wheel.

The casing ply includes a support structure extending axially from one bead to the other to form a toroidal structure, comprising a plurality of textile or metallic cords incorporated in a layer of elastomeric material. In tyres of the radial type the aforesaid cords lie essentially in planes containing the axis of rotation of the tyre.

On the crown of the casing an annular superstructure is placed, known as belt structure, normally consisting of one or more strips of rubberized fabric, wound so that they overlap each other, and a tread of elastomeric material, wound around the belt package and impressed with a relief pattern for the rolling contact of the tyre with the road. Two sidewalls of elastomeric material, each extending radially outwards from the outer edge of the corresponding bead, are also placed on the casing in axially opposed lateral positions.

The rim has a base surface provided with a central channel and two bead seats, on which the beads of the tyre bear, each seat being axially delimited between a terminal radial surface (flange) in an axially outer position and an axially inner annular stop projection for securing the bead in the corresponding seat.

Conventionally, an inner tube, inflated with pressurized air injected into the chamber through an inflation valve fitted into the said inner tube and projecting outside the wheel, is placed between the tyre and the rim to maintain the supporting capacity of the tyre. The inner tube generally comprises a tubular body of elastomeric material inflatable into a toroidal shape. The inflation valve usually comprises a base for connection to the inner tube, and a cylindrical casing (stem) fixed to the base and containing the activation mechanism for the operations of inflation and deflation.

In tyres of the type known as "tubeless", in other words those not requiring the use of an inner tube for operation, the pressurized air is contained between the tyre and the supporting rim. The radially inner surface of the casing is therefore covered with what is known as a "liner", in other words one or more layers of air-impermeable elastomeric material, in order to retain the pressurized air within it. Such a tyre is inflated by means of an inflation valve which is usually located on the rim channel.

Nowadays it is strongly felt the need of monitoring the conditions of the tyre during use, by determining characteristic parameters of the tyre which represent its operating state, both in static conditions and, especially, during the running of the vehicle.

One parameter of the tyre which can be monitored is the inflation pressure. A tyre which is not correctly inflated can result in increased fuel consumption, a degradation of the manoeuvrability of the vehicle, and greater wear of the tyre, to name only the most important problems. Systems have therefore been developed to monitor the inflation pressure of tyres during use, these systems informing the driver of any decrease in pressure and the consequent need to reestablish optimal conditions in order to avoid the problems mentioned above.

Another parameter which can yield very important information on the state of the tyre during use is the temperature in the inner volume of the tyre occupied by the inflation air. An anomalous rise in temperature is a signal of the presence of critical operating conditions, which may result in irreversible damage to the tyre.

For example, patent US-5,540,092 describes a system for monitoring the inflation pressure in a tyre, comprising a pressure measurement unit and a unit for transmitting an encoded signal to the vehicle on which the tyre is fitted. The transmitting unit can be fitted inside or outside the tyre. The said encoded signal is transferred by inductive coupling between the transmission unit and a fixed antenna. This transmission unit is battery-powered.

Patent US-5,900,808 describes a system for monitoring the internal pressure of a tyre, comprising battery-powered sensor means and a radio-frequency transmitter for transmitting the signal generated by the said sensor means to a receiver. The system also comprises switching means for enabling the power supply to the transmitter when the sensor means signal a condition of low pressure in the tyre. Battery life is extended because the transmitter is supplied with power only when a signal has to be transmitted to the receiver. The sensor means associated with the transmitter are fitted in the wheel rim by suitable attaching means before the tyre is installed and inflated.

Patent US-5,562,787 describes a method for monitoring a tyre of a vehicle during use, for example by measuring the pressure and temperature of the air inside the tyre, or the number of revolutions of the wheel, or additionally for transmitting information identifying the said tyre. The method uses a programmable self-powered device which is fitted on the inner surface of the tyre or inserted into the wall of the wheel rim. The device comprises a power source which can be put into an active or an inactive state by means of a switch device, a sensor for monitoring the aforesaid information, an integrated circuit, an amplifier and an antenna. A transceiver located on the vehicle or in a remote position interrogates the programmable self-powered device, which replies with a radio-frequency signal containing the required information. The programmable self-powered device is activated by the said remote transceiver which operates the switch device which puts the power source into the active state. The device can be located on the inner surface of the tyre next to the fixing bead wires, in a radially inner position with respect to the turnup edge of the casing, or in the crown area of the tread. The device can be encapsulated in a rigid or semi-rigid container with a protective function, consisting for example of a crosslinked elastomeric material having a Shore A hardness in the range from 50 to 100 and a Shore D hardness in the range from 5 to 80. To secure the device, encapsulated in this way, to the inner surface of the tyre, a covering layer is used, including flexible rubbers, for example natural rubber or synthetic diene rubbers (for example synthetic polyisoprene, polybutadiene, styrene-butadiene copolymers and the like), having a Shore A hardness in the range from 50 to 95. The covering layer is provided with an aperture allowing the pressure sensor to measure the internal pressure of the tyre. The device can be located within a recess formed in the inner surface of the tyre, for example by inserting a Teflon^{®} matrix in the liner of the green tyre. The covering layer can be vulcanized together with the green tyre or can be stuck to the inner surface of the finished tyre with a suitable adhesive.

Patent US-6,217,683 describes a tyre provided with a module for monitoring and/or storing information relating to the said tyre, wherein the said module is fixed on the inner surface of the tyre by a fixing system which comprises a rubber support fastened at one end to the inner surface of the tyre and at the other end to the module by means of a mechanical connection. This connection consists of two parts, namely a first part connected to the rubber support and a second part connected to the module, which interact in order to fix the said module stably to the inner surface of the tyre. The fixing system can also include a spacer element for keeping the module sufficiently far away from the inner surface of the tyre, in order to avoid damage due to the bending stresses generated within the tyre during use. The fixing system provided in this way allows the module to be removed for replacement, repair or reprogramming.

Patent application EP-1,026,015 describes a method and apparatus for monitoring the pressure of a tyre, which comprises a first coil for sending a low-frequency signal to a second coil, which activates a sensor associated with the said tyre. The said sensor is associated with the stem of the inflation valve of the said tyre and is capable of measuring the inflation pressure of the tyre.

Patent application WO 99/29524 describes a pressure sensor for a tyre which is encapsulated in an elastomeric material (preferably natural rubber) which adheres to the inner surface of the tyre, preferably in the proximity of the equatorial plane of the tyre. Means are also provided for ensuring the establishment of an equilibrium pressure between the sensor and the internal space of the tyre. The sensor encapsulated in the elastomeric material is fixed to the inner surface of the tyre by means of an adhesive or by the insertion of the encapsulated sensor during the manufacture of the tyre.

Patent application EP-1,078,780 describes a method and apparatus for inserting an electronic device into a tyre and removing it therefrom. This apparatus comprises a crosslinked rubber element having a first face shaped in such a way as to create a recess of specified shape and a second face, opposed to the first, having a profile shaped to be complementary to the inner profile of the tyre. The crosslinked rubber element can be inserted into the tyre during the manufacture of the tyre and then crosslinked "in situ", or can be assembled in the tyre after the tyre and the rubber element have been vulcanized separately. When the crosslinked rubber element has been fixed to the inner surface of the tyre, the sensor, having been previously encapsulated in a rigid material, is inserted into the recess present in the crosslinked rubber element and fixed by suitable removable fixing means. Thus the sensor can be inserted into the tyre in a removable way, to enable replacement, repair or other operations to be carried out on the said sensor.

EP-A-1 006 010, considered to be the closest prior art, describes an attachment between a monitoring device and an innerliner of a tyre and a method for adhering a monitoring device to a tyre comprising the steps of:
- selecting a portion of the innerliner of the tyre where the monitoring device will be connected;
- roughening the selected portion of the innerliner;
- applying an adhesive to at least one of the monitoring device and roughened portion;
- placing the monitoring device on the roughened portion of the innerliner; and
- curing the adhesive.

The Applicant has found that it is possible to fix a device stably to the inner surface of a tyre by means of a fixing element of crosslinked elastomeric material, associated with one side of the device, which can adhere removably (and therefore in a repositionable way) when brought into contact with the inner surface of the tyre, and can change its shape under the action of centrifugal force so that it becomes adapted to the inner surface of the tyre during the rolling of the tyre, so as to eliminate mechanical stresses between the liner and the device due to differences in their geometry which can cause the device to become detached. As a result of the heating caused by the rolling of the tyre, the elastomeric material constituting the fixing element is at least partially crosslinked and therefore stabilizes the shape formed during rolling and is also able to establish an essentially stable and irreversible bond with the said inner surface of the tyre. Moreover, the material located between the device and the tyre is flexible, so that it can resist the stresses transmitted by the tyre during use, thus preventing these stresses from being transmitted to the said device.

Therefore, according to a first aspect the present invention relates to a method for installing a device for measuring at least one characteristic parameter of a tyre in a finished tyre having an inner surface, the method comprising:
applying the device to a specified area of the inner surface of the tyre by interposition of a fixing element comprising a crosslinkable elastomeric material capable of adhering in a repositionable way to the inner surface of the tyre and of stably fixing the device to said inner surface;
fitting the finished tyre on a rim; and rotating the tyre so as to adapt the shape of the fixing element to the inner surface of the tyre and to cause at least a partial crosslinking of the crosslinkable elastomeric material.
The Applicant believes that, during the rotation of the tyre, the developed centrifugal force causes small deformations in the shape of the fixing element such that the element is adapted in an optimal way to the surface of the liner. The reached shape is then stabilized by the crosslinking of the elastomeric material constituting the fixing element, which takes place subsequently as a result of the heat developed during rolling on the road. The crosslinking also helps to increase and stabilize the adhesion between the sensor and the tyre. It is also believed that the adhesion process is promoted by the centrifugal force, which exerts a pressure on the device without any need to apply mechanical means of compression.

The device can be applied advantageously to the inner surface of the tyre in a crown area, preferably in the proximity of the equatorial plane of the tyre. In this position, the effect of the centrifugal force on the sensor is greater than in any other position on the inner surface of the tyre, and consequently the adaptation and adhesion of the fixing element to the surface of the liner is optimal.

According to another aspect the present invention relates to a kit for installing a device for measuring at least one characteristic parameter of a tyre onto the inner surface of a finished tyre, comprising:
the device; and
at least one fixing element comprising a crosslinkable elastomeric material capable of adhering in a repositionable way to the inner surface of the finished type and of stably fixing the device to said inner surface.

Preferably, the said device includes a sensor installed on a substrate, the said fixing element being associated with the said substrate.

In the present description and in the claims, the term "device for measuring at least one characteristic parameter of a tyre" denotes any electrical, electronic or piezoelectric device capable of measuring and/or processing and/or transmitting to the exterior (for example to a fixed unit present on the vehicle or positioned at a point through which the said vehicle passes) at least one characteristic parameter of the tyre.

In the present description and in the claims, the term "characteristic parameter of the tyre" denotes any information of the digital or analogic type, instantaneous or time-mediated, relating to:
operating conditions of the tyre, for example the internal inflation pressure or the internal temperature of the tyre or of any of its parts (see for example patents US-5,540,092, US-5,900,808 and US-5,562,787); data relating to the dynamic behaviour of the tyre, for example centripetal, longitudinal and/or lateral acceleration or movements in three directions of any point of the tyre (see for example patents EP-887,211, WO 01/36241 and US-6,204,758); forces of interaction between the bead and the rim; and tyre identification data, such as data on manufacture or uniformity (see for example patent US-6,217,683).

The device can therefore include at least one sensor for measuring at least one characteristic parameter of the tyre (for example, a pressure sensor, a temperature sensor, an accelerometer, a movement sensor or a velocity sensor), or an electronic memory which contains data identifying the tyre (for example, a chip or a transponder).

In a preferred embodiment, the crosslinkable elastomeric material is brought to a degree of crosslinking of at least 30% upon heating to a temperature in the range from 40°C to 90°C for a period of not more than 8 hours, preferably not more than 4 hours. The degree of crosslinking can be determined by MDR rheometric analysis (MDR = Moving Die Rheometer) according to the specifications of ASTM D5289-95.

Preferably, a crosslinkable elastomeric material suitable for forming the fixing element according to the present invention comprises:
100 phr of at least one crosslinkable elastomer;
from 20 to 100 phr, preferably from 30 to 70 phr, of at least one plasticizing oil;
from 20 to 150 phr, preferably from 40 to 100 phr, of at least one reinforcing filler;
from 0 to 80 phr, preferably from 0 to 60 phr, of at least one low molecular weight amorphous polymer (preferably a low molecular weight homologue of the elastomer).

(phr = parts by weight per 100 parts of polymer base).

An example of a crosslinking system that may be used is:
(i) from 0.3 to 12 phr, preferably from 0.5 to 8 phr, of at least one organic peroxide; or
(ii) from 0.1 to 5 phr, preferably from 0.2 to 3.5 phr, of sulphur (or equivalent quantity of a sulphur donor), and

from 2 to 10 phr, preferably from 3 to 8 phr, of at least one vulcanization accelerator.

The crosslinkable elastomer is generally a high molecular weight amorphous polymer, with an average molecular weight of not less than 150,000, preferably from 200,000 to 3 million, and can be selected, for example, from: natural rubber (NR), synthetic polyisoprene, epoxidized natural rubber (ENR), polybutadiene (BR), polychloroprene, acrylonitrile-butadiene copolymer (NBR), butyl rubber (IIR), halobutyl rubber (XIIR) (particularly chlorobutyl rubber or bromobutyl rubber), styrene-butadiene copolymer (SBR), styrene-isoprene copolymer, styrene-isoprene-butadiene terpolymer, ethylene-propylene copolymers (EPR), ethylene/propylene/diene copolymers (EPDM), polyisobutene, or mixtures thereof. If the crosslinking agent is an organic peroxide, the elastomeric material preferably does not comprise polyisobutene or butyl rubber (IIR).

The plasticizing oil can be selected from: mineral oils, vegetable oils, and synthetic oils, for example aromatic oils, naphthenic oils, phthalates, soybean oil, epoxidized soybean oil, or mixtures of these.

The reinforcing filler can be selected from: carbon black, silica, alumina, aluminosilicates, calcium carbonate, kaolin, or mixtures thereof.

The low molecular weight amorphous polymer which may be present has a mean molecular weight which is preferably less than 150,000, preferably from 500 to 100,000, and can be selected from: depolymerized natural rubber, liquid synthetic polyisoprene, liquid polybutadiene, liquid polybutene, liquid ethylene/propylene/diene copolymers, liquid butyl rubber, or mixtures thereof.

The crosslinkable elastomeric material may also contain other conventional components such as antioxidants, protective agents, adhesion resins, and co-crosslinking agents.

The organic peroxide can be selected from those having a half-life gretaer than 5 minutes at 80°C, for example cumyl peroxyneodecanoate, tert-amyl peroxypivalate, and dichlorobenzoyl peroxide.

If the crosslinking system is sulphur-based, the crosslinking agents may be selected from those commonly used for the sulphur crosslinking of diene elastomers. It is also possible to add activating agents such as stearic acid, zinc compounds such as ZnO and ZnCO₃, and zinc salts of fatty acids.

In a preferred embodiment, the sulphur-based crosslinking system comprises at least one accelerator which is highly active even at relatively low temperatures (known as an ultra-accelerator), selected for example from: dithiocarbamates, thiurams, thiazoles, and mixtures thereof.

Examples of ultra-accelerators which can be used according to the present invention are:
zinc N-phenyl-N-ethyl-dithiocarbamate, zinc N,N-dimethyl-dithiocarbamate, zinc N,N-diethyl-dithiocarbamate, 2-mercapto-benzothiazole (MBT), 2-mercapto-benzothiazole disulphide (MBTS), N-cyclohexyl-2-benzothiazyl sulphenamide (CBS), 2-dicyclohexylbenzothiazyl sulphenamide (DCBS), N-tert-butyl-2-benzothiazyl sulphenamide (TBBS), N-morpholino-2-benzothiazyl sulphenamide (MBS), and N-tert-butyl-dithiobenzothiazole (TBSI).

In order to increase the crosslinking rate and/or decrease the temperature required to obtain a sufficient degree of crosslinking, at least one nitrogen-containing co-accelerator can advantageously be added to the crosslinkable elastomeric material, the co-accelerator being selected, for example, from: N-cyclohexyl-N-ethylamine or diphenylguanidine (DPG), in an amount generally from 0.25 to 10 phr, and preferably from 0.5 to 8 phr.

In a further embodiment, the fixing element comprises a first layer consisting of a first crosslinkable elastomeric material as described above, containing sulphur (or a sulphur donor) but without vulcanizing accelerators, and a second layer, brought into contact with the first layer, consisting of a second crosslinkable elastomeric material as described above, containing at least one accelerator but without sulphur (or sulphur donors). Preferably, the second layer is the one brought into contact with the inner surface of the tyre when the device is installed. This prevents the occurrence of undesired phenomena of pre-crosslinking of the fixing element before its use, since the two layers are brought into contact only when the device is installed.

The second layer, containing at least one accelerator but without sulphur, can be based on an elastomer in solid form, or can be applied in liquid form, for example as a solution in organic solvent or as an aqueous emulsion.

The dimensions of the fixing element are chosen essentially according to the dimensions and weight of the device to be installed. Generally, the width and length of the fixing element are sufficient to cover the lower surface of the device to be fixed to the tyre, while the thickness is generally from 0.5 mm to 10 mm, preferably from 1 mm to 5 mm.

Further characteristics and advantages will appear from the detailed description of a preferred, but not exclusive, embodiment of the present invention in its different aspects.

This description is given below with reference to the attached drawings, provided solely for guidance and therefore without restrictive intent, wherein:
Figure 1 shows a cross section of a tyre fitted on its supporting rim, with a device according to the invention fitted into this tyre;
Figure 2 shows a block diagram of a fixed unit located on the vehicle and connected by a radio-frequency link to the said device;
Figure 3 shows a possible embodiment of the electronic part of the device according to the invention (as a block diagram);
Figure 4a shows a side view of an embodiment of the device according to the invention;
Figure 4b shows a plan view of an embodiment of the device according to the invention; and
Figure 5 shows a side view of another embodiment of the device according to the invention.

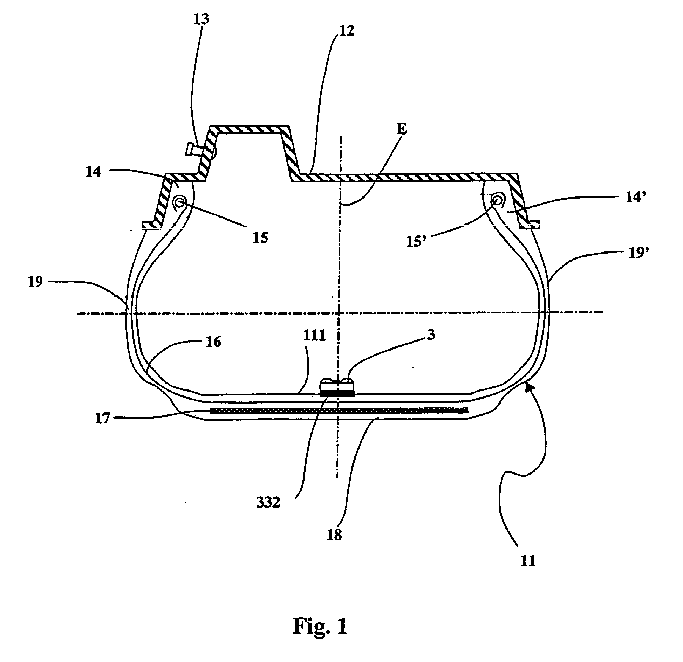

Figure 1 shows a wheel comprising a tyre 11, of the type conventionally known as "tubeless", in other words without an inner tube, and a supporting rim 12. This tyre is inflated by means of an inflation valve 13 positioned, for example, on the channel of the said rim.

The tyre 11 consists of an internally hollow toroidal structure formed by a plurality of components, and in the first place by a textile or metallic casing 16, having its two beads 14 and 14', each formed along an inner circumferential edge of the casing 16 for fixing the tyre 11 to the corresponding supporting rim 12. The said casing 16 comprises at least a pair of annular reinforcing cores 15 and 15', known as bead wires, inserted in the said beads 14 and 14'.

The casing 16 is formed by at least one reinforcing ply which includes textile or metallic cords extending axially from one bead 14 to the other 14' in a toroidal profile, and which has each of its ends associated with a corresponding bead wire 15 and 15'.

In tyres of the type known as radial, the aforesaid cords lie essentially in planes containing the axis of rotation of the tyre.

On the crown of the casing there is placed an annular structure 17, known as the belt structure, normally consisting of one or more strips of rubberized fabric, wound so that they overlap each other to form what is known as a "belt package", and a tread 18 of elastomeric material, wound around the belt package and impressed with a relief pattern for the rolling contact of the tyre with the road. Two sidewalls 19 and 19' of elastomeric material, each extending radially outwards from the outer edge of the corresponding bead 14 and 14', are also placed on the casing in axially opposed lateral positions.

In tyres of the type known as "tubeless", the inner surface of the casing is normally covered with what is known as a "liner" 111, in other words one or more layers of air-impermeable elastomeric material. Finally, the casing can comprise other known elements, i.e. edgings, strips and fillers according to the specific design of the tyre.

The combination of all these elements determines the mechanical characteristics of elasticity, rigidity and resistance to deformation of the tyre, which forms the connection between the system of forces applied to the tyre and the extent of the corresponding deformations which are undergone.

The device for measuring at least one characteristic parameter of a tyre comprises, in general terms, a fixed unit 2, preferably located on the vehicle to which the tyre is fitted, and a moving unit 3 (namely the device including the sensor) associated with the said tyre.

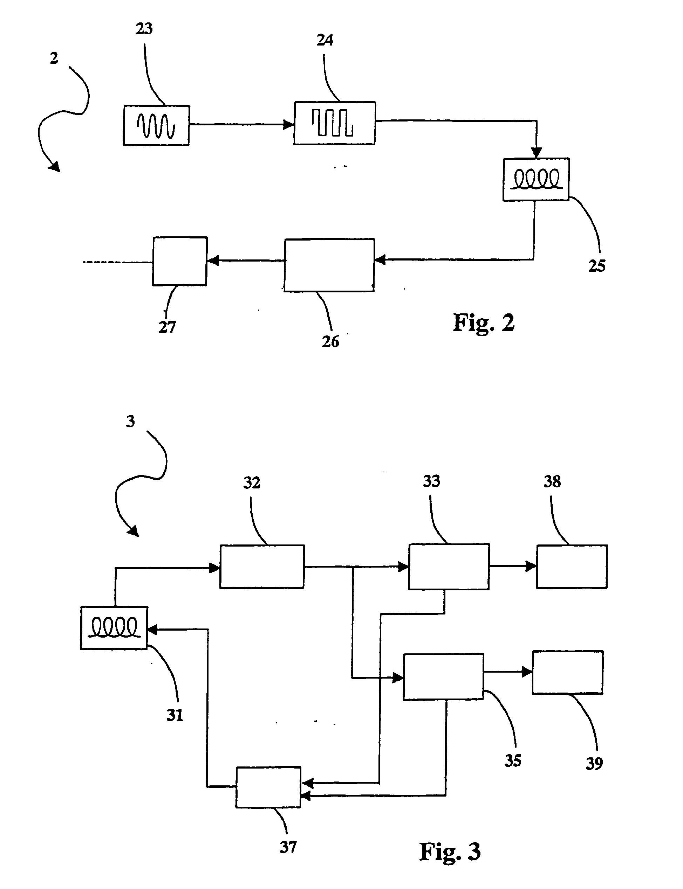

Figure 2 shows a block diagram of the said fixed unit 2, preferably comprising a device for transmitting to the said moving unit and a device for receiving from the said moving unit.

The transmission device preferably comprises an oscillator circuit 23, which supplies a driver circuit 24 for a first antenna 25, referred to below as the fixed antenna.

The receiving device comprises a radio-frequency receiver 26 connected to the said antenna, and preferably also an electrical demodulator device 27.

Preferably, the electrical energy required to power the said fixed unit can be supplied directly by the vehicle battery through a suitable driver circuit (not shown). Advantageously, the said fixed unit also communicates with a device for displaying the said measured parameters, located on board the vehicle. For example, the inflation pressure can advantageously be displayed on the dashboard of the vehicle, on a suitable display unit.

The said moving unit 3, shown in Figure 3, comprises in general terms a device for transmission to the said fixed unit and a device for measuring at least one characteristic parameter of a tyre.

Preferably, the said moving unit is supplied by a battery located within it and is provided with a device to enable power to be supplied to the said device for measuring characteristic parameters of the tyre when the tyre is rolling.

The moving unit can also contain a self-powering device, which generates electricity as a result of the stresses to which the said moving unit is subjected (for example, centrifugal force or the deformations of the liner).

Alternatively, the said moving unit is supplied by the said fixed unit by means of a device for receiving from the said fixed unit. This device for receiving from the said fixed unit preferably comprises a second antenna 31, referred to below as the moving antenna, connected to an electrical energy storage circuit 32.

The measuring device preferably comprises at least one driver circuit or encoder/decoder circuit for at least one measuring sensor for at least one characteristic parameter of the tyre. In particular, the example in Figure 3 shows two driver circuits 33 and 35 for two sensors 38 and 39, namely a first sensor 38 for measuring the inflation pressure of the tyre and a second sensor 39 for measuring the temperature inside the tyre. Alternatively, a single driver circuit encodes and/or decodes the pressure and/or temperature signal generated by a single sensor.

These sensors can be sensors for measuring an absolute value of pressure or temperature, or can be threshold sensors, in other words those which signal a departure from a previously specified threshold value of pressure and/or temperature.

Within this moving unit, the pressure and temperature signals can be suitably encoded for their transmission outside the tyre; for example, they can be associated with an identification code of the tyre, in order to prevent confusion with similar signals originating from other tyres of the vehicle.

The device for transmission to the said fixed unit comprises a reading circuit 37, which is connected to the said moving antenna 31 and which can receive signals associated with the said sensors from the said at least one driver device.

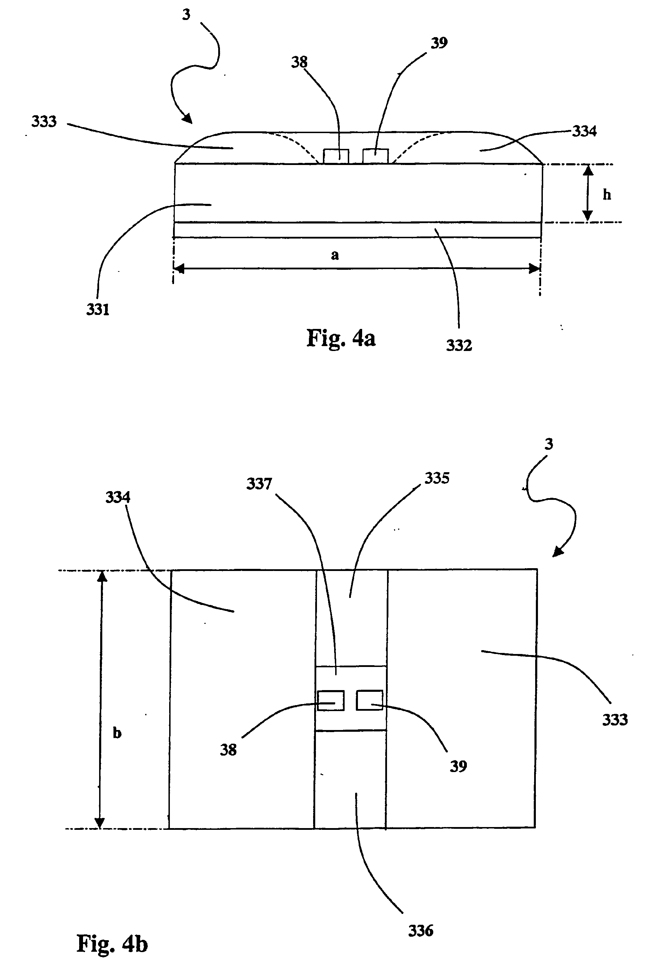

A possible structure of the device according to the invention is shown in Figures 4a and 4b. In particular, the device comprises, in general terms, a substrate 331, on which are provided electrical connections and electrical components for the aforesaid receiving and transmitting devices, for the said moving antenna and for the sensors. Preferably, these sensors 38 and 39 are, in turn, fixed to or integrated in the substrate 331. For example, in Figure 4a these sensors 38 and 39 are fixed to the upper surface of the substrate 331, being placed preferably in a central position. Additionally, substantially all of the electrical components of the device can be formed on the substrate 331 by an integrated technology. The substrate 331 is preferably of parallelepipedal shape with a length a, width b, thickness or height h in Figures 4a and 4b. Alternatively, the substrate 331 is of essentially cylindrical shape and the sensors are placed on one of the two end surfaces.

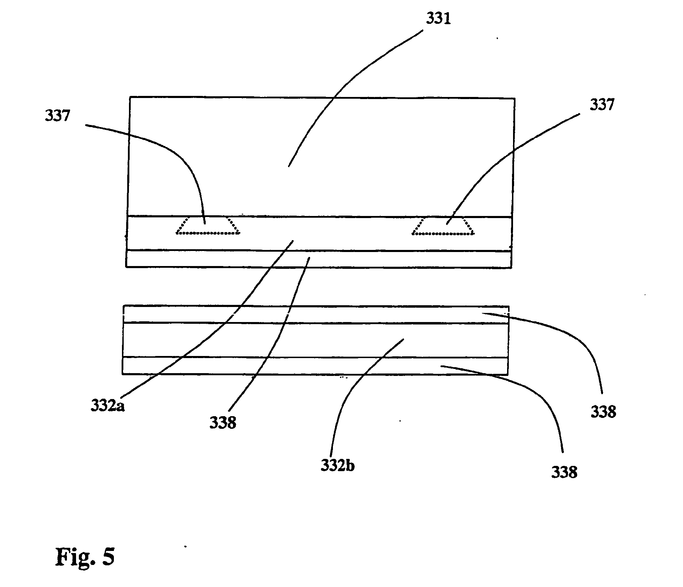

The substrate 331 is associated with a fixing element 332 according to the invention, which extends preferably over the whole lower surface of the substrate 331. The fixing element 332 can be associated with the substrate 331 by adhesion, thanks to the adhesive properties of the crosslinkable material itself or by the interposition of an adhesive element (not shown in the figure). The association between the fixing element 332 and the substrate 331 can also be provided by mechanical means (as shown, for example, in Figure 5).

When the device is inserted into the tyre, the fixing element adheres in a removable way to the inner surface of the tyre without the need for any special operations, the application of manual pressure being sufficient. Since it adheres removably, the device can be repositioned if necessary because of incorrect positioning or for other reasons, but the adhesion is anyway sufficient to maintain the desired position during all the subsequent stages of fitting the tyre to the rim and then on the vehicle wheel.

During the rolling of the tyre, the crosslinkable elastomeric material, being viscous, changes its shape under the effect of the centrifugal force, thus effectively adhering to the surface of the liner. The elastomeric material forming the fixing element is then at least partially crosslinked, mainly as a result of the excess heating due to the cyclic action of compression and release exerted on the various components of the tyre during rolling, so that the shape of the element is stabilized and a bond is formed between the device and the inner wall of the tyre which is essentially stable in normal conditions of use of the tyre. Without committing itself to an interpretative theory, the Applicant considers that the stability of the bond is also due to a co-crosslinking between the fixing element and the elastomeric material forming the inner layer (liner) of the tyre. The applicant also considers that the centrifugal force plays a significant role in the reinforcement of this bond, since it exerts a compressive force which promotes the interaction between the fixing element and the inner wall of the tyre.

If a greater adhesion between the device and the tyre is required, it may be advantageous to interpose a further adhesive element, for example a double-sided adhesive tape such as the product #889 by 3M, consisting of a polyester tape coated with an acrylic adhesive on both sides, between the fixing element and the inner surface of the tyre.

A first pair of protective elements 333 and 334, whose length is preferably equal to the length of the substrate, is placed on the upper surface of the substrate, together with a second pair of protective elements 335 and 336, fitted one opposite the other between the said first pair of protective elements 333 and 334.

Thus, in the example in Figures 4a and 4b, the whole upper surface of the substrate 331 is protected except for a central area 337 in which the said sensors 38 and 39 are placed. These protective elements on the upper surface of the substrate 331 essentially have the function of providing mechanical protection for the sensors 38 and 39, and are essentially electromagnetically inert, so that they do not impede in any way either the process of receiving and transmitting information or the process of receiving electrical energy. The materials from which they are made can also be electrically insulating and can act additionally as electrical protection for the circuits on the substrate 331. In particular, the protective material prevents the possibility of creation of short circuits between the individual electronic components present on the faces of the device.

The fixing element 332 may optionally have its lower free surface covered with a protective film (not shown in Fig. 4a) to prevent the crosslinkable elastomeric material from coming into contact with the external environment. The protective film, consisting for example of a plastic material having low adhesion to the crosslinkable material (being made for example from ethylene/vinyl acetate copolymer - EVA) is removed before the device is inserted into the tyre.

The method according to the present invention can be applied to tyres of any type and can advantageously be implemented by the user while worn tyres are being replaced with new tyres. This is because the operation of inserting the device into the tyre can be performed in a simple and rapid way and does not have to be carried out by specialist personnel.

During a tyre replacement operation, the device is inserted into the tyre before the tyre is fitted onto the corresponding supporting rim, and advantageously before the wheel balancing operation is carried out. During this operation, the tyre is rotated while remaining attached to a suitable balancing machine. At this stage it is already possible to cause minor deformations of the shape of the fixing element, to adapt it in an optimal way to the surface of the liner, and there can also be at least a partial crosslinking of the fixing element, to ensure that the device does not become detached from the inner surface of the tyre during the subsequent operations of fitting the tyre on a vehicle. Subsequently, the crosslinking of the elastomeric material is essentially completed during the rolling of the tyre when it is in use, to stabilize the shape of the fixing element and to form an essentially stable fixing of the moving unit to the inner surface of the tyre.

Figure 5 shows an alternative embodiment of the present invention, in which the fixing element 332 comprises a first layer 332a associated with the lower surface of the substrate 331 and a second layer 332b, which is in contact with the first layer 332a, and which is designed to come into contact with the inner surface of the tyre to fix the assembly in a stable way to the said tyre. Fig. 5 also shows a method for associating the fixing element 332 with the substrate 331 in a stable way, by means of mechanical connecting elements 337, for example, as shown in Fig. 5, by means of guides of dovetail shape or of any other shape which can form a mechanical joint between the substrate 331 and the fixing element 332.

The layers 332a and 332b are preferably covered on their free surfaces with protective films 338 which are removed when the method according to the invention is carried out. After stripping the corresponding protective films 338 from the first layer 332a and the second layer 332b, the operator first sticks the second layer 332b to the inner surface of the tyre and then sticks the first layer 332a onto the said second layer 332b.

The first layer 332a is made from an elastomeric material containing sulphur (or a sulphur donor) but without vulcanizing accelerators, while the second layer 332b is made from a similar elastomeric material containing at least one vulcanizing accelerator but without sulphur (or sulphur donors). The crosslinking of the two layers 332a and 332b takes place only when they are brought into contact, and the bond between them is particularly stable, probably because of a co-crosslinking of the elastomeric materials which takes place especially at the interface of the layers. Alternatively, the positions of the two layers 332a and 332b can be reversed, in other words the second layer 332b designed to be brought into contact with the liner of the tyre contains sulphur but not vulcanizing accelerators, while the first layer 332a contains at least one vulcanizing accelerator but no sulphur.

The present invention will now be further illustrated by the following example of embodiment.

A pressure and temperature sensor, which was provided with a signal transmission system, and was of essentially cylindrical shape, with a diameter of approximately 26 mm, a height of 13 mm and a weight of 11 g, was made to adhere to a cylinder of crosslinkable material (diameter 27 mm, thickness 3 mm) having the following composition:

| | |
|---|---|
| Butyl^{®} 301 | 100 phr |
| Aromatic oil | 40 phr |
| Indopol^{®} H100 | 40 phr |
| Carbon Black N660 | 60 phr |
| Sulphur | 3 phr |
| Vulkacit^{®} CZ | 4.5 phr |
| Vulkacit^{®} P-3N Extra | 1.5 phr |
| Vulkacit^{®} D | 1.5 phr |

- Butyl^{®} 301 (Bayer): butyl rubber with Mooney viscosity ML(1+8) of 51 at 125°C;
- Indopol^{®} H100 (BP Chemical): polybutene oil with a weight average molecular weight of 1450;
- Vulkacit^{®} CZ (Bayer): CBS (N-cyclohexyl-2-benzothiazyl sulphenamide) accelerator;
- Vulkacit^{®} P-3N Extra (Bayer): zinc N-phenyl-N-ethyl-dithiocarbamate accelerator;
- Vulkacit^{®} D (Bayer): DPG (diphenylguanidine) co-accelerator.

The assembly was inserted into a Pirelli^{®} P6^{®} 205 65 R16 tyre, the free face of the cylinder of crosslinkable material being positioned on the inner surface of the liner, in the crown area, with the manual application of moderate pressure. The tyre was then fitted onto the rim of a motor vehicle and inflated to a pressure of 2.2 bar. The motor vehicle travelled along an asphalt road for approximately 8 hours at an average speed of 100 km/h, with peaks of 150 km/h, at an external air temperature of approximately 28°C. When the tyre was removed from the rim, it was found that the sensor had bonded stably to the liner and could be detached only by using mechanical means. The sensor had not suffered any damage.

## Claims

1. Method for installing a device (3) for measuring at least one characteristic parameter of a tyre (11) in a finished tyre (11) haying an inner surface, comprising:
- applying the device to a specified area of the inner surface of the finished tyre, by interposition of a fixing element (332) comprising a crosslinkable elastomeric material capable of adhering in a repositionable way to the inner surface of the finished tyre and of stably fixing the device (3) to said inner surface;
- fitting the finished tyre on a rim (12); and
- rotating the tyre so as to adapt the shape of the fixing element (332) to the inner surface of the tyre and to cause at least a partial crosslinking of the crosslinkable elastomeric material.

2. Method according to Claim 1, wherein the device (3) is applied onto the inner surface of the tyre (11) in a crown area.

3. Method according to any one of the preceding claims, wherein the crosslinkable elastomeric material is brought to a degree of crosslinking of at least 30% upon heating to a temperature from 40°C to 90°C for a period of not more than 8 hours.

4. Method according to any one of the preceding claims, wherein the crosslinkable elastomeric material comprises:
100 phr of at least one crosslinkable elastomer;
from 20 to 100 phr of at least one plasticizing oil;
from 20 to 150 phr of at least one reinforcing filler;
from 0 to 80 phr of at least one low molecular weight amorphous polymer.

5. Method according to Claim 4, wherein the crosslinkable elastomeric material comprises from 0.3 to 12 phr of at least one organic peroxide.

6. Method according to Claim 5, wherein the organic peroxide has a half-life greater than 5 minutes at 80°C.

7. Method according to Claim 4, wherein the crosslinkable elastomeric material comprises from 0.1 to 5 phr of sulphur (or an equivalent quantity of a sulphur donor), and from 2 to 10 phr of at least one vulcanizing accelerator.

8. Method according to Claim 7, wherein the said at least one vulcanizing accelerator is selected from dithiocarbamates, thiurams and thiazoles.

9. Method according to Claim 7 or 8, wherein the crosslinkable elastomeric material further comprises at least one nitrogen-containing co-accelerator in an amount of from 0.25 to 10 phr.

10. Method according to any one of the preceding claims, wherein the fixing element (332) comprises a first layer (332a) consisting of a first crosslinkable elastomeric material containing sulphur (or a sulphur donor) and without vulcanizing accelerators, and a second layer (332b), brought into contact with the first layer (332a), consisting of a second crosslinkable elastomeric material containing at least one accelerator and without sulphur (or sulphur donors).

11. Method according to Claim 10, wherein applying the device is carried out by placing the said second layer (332b) in contact with the inner surface of the finished tyre (11).

12. Kit for installing a device (3) for measuring at least one characteristic parameter of a tyre (11) onto the inner surface of a finished tyre, comprising:
the device (3);
at least one fixing element (332) comprising a crosslinkable elastomeric material capable of adhering in a repositionable way to the inner surface of the finished tyre and of stably fixing the device (3) to said inner surface.

13. Kit according to Claim 12, wherein the device (3) includes a sensor (38, 39) installed on a substrate (331), the said fixing element (332) being associated with the said substrate (331).

14. Kit according to Claim 13, wherein the fixing element (332) is associated with the substrate (331) by adhesion.

15. Kit according to Claim 13, wherein the fixing element (332) is associated with the substrate (331) by mechanical means (337).

16. Kit according to any one of Claims 12 to 15, wherein the crosslinkable elastomeric material is brought to a degree of crosslinking of at least 30% upon heating to a temperature from 40°C to 90°C for a period of not more than 8 hours.

17. Kit according to any one of Claims 12 to 16, wherein the crosslinkable elastomeric material comprises:
100 phr of at least one crosslinkable elastomer;
from 20 to 100 phr of at least one plasticizing oil;
from 20 to 150 phr of at least one reinforcing filler;
from 0 to 80 phr of at least one low molecular weight amorphous polymer.

18. Kit according to Claim 17, wherein the crosslinkable elastomeric material comprises from 0.3 to 12 phr of at least one organic peroxide.

19. Kit according to Claim 18, wherein the organic peroxide has a half-life greater than 5 minutes at 80°C.

20. Kit according to Claim 17, wherein the crosslinkable elastomeric material comprises from 0.1 to 5 phr of sulphur (or an equivalent quantity of a sulphur donor), and from 2 to 10 phr of at least one vulcanizing accelerator.

21. Kit according to Claim 20, wherein the said at least one vulcanizing accelerator is selected from dithiocarbamates, thiurams and thiazoles.

22. Kit according to Claim 20 or 21, wherein the crosslinkable elastomeric material also comprises at least one nitrogen-containing co-accelerator in an amount of from 0.25 to 10 phr.

23. Kit according to any one of Claims 17 to 22, wherein the fixing element (332) comprises a first layer (332a) consisting of a first crosslinkable elastomeric material containing sulphur (or a sulphur donor) and without vulcanizing accelerators, and a second layer . (332b) consisting of a second crosslinkable elastomeric material containing at least one accelerator and without sulphur (or sulphur donors), the said layers being kept separate and being brought into contact at the time of installation.

24. Kit according to Claim 23, wherein the said second layer (332b) is brought into contact with the inner surface of the tyre (11) at the time of installation.

## Patentansprüche

1. Verfahren zum Installieren einer Vorrichtung (3) zum Messen wenigstens eines charakteristischen Parameters eines Reifens (11) in einem fertiggestellten Reifen (11), der eine Innenfläche hat, wobei bei dem Verfahren
- die Vorrichtung an einem vorgegebenen Bereich der Innenfläche des fertigen Reifens unter Zwischenanordnutzg eines Befestigungselements (332), das ein vernetzbares elastomeres Material aufweist, das in der Lage ist, repositionierbar an der Innenfläche des fertiggestellten Reifens zu haften, angebracht und die Vorrichtung (3) an der Innenfläche stabil festgelegt wird,
- der fertiggestellte Reifen auf eine Felge (12) aufgepasst wird und
- der Reifen so gedreht wird, dass die Form des Befestigungselements (322) an die Innenfläche des Reifens angepasst und wenigstens eine Teilvemetzung des vernetzbaren elastomeren Materials herbeigeführt wird.

2. Verfahren nach Anspruch 1, bei welchem die Vorrichtung (3) auf die Innenfläche des Reifens (11) in einem Kronenbereich aufgebracht wird.

3. Verfahren nach einem der vorhergehenden Ansprüche, bei welchem das vernetzbare elastomere Material auf einen Vernetzungsgrad von wenigstens 30% nach Erwärmen auf eine Temperatur von 40°C bis 90°C über einen Zeitraum von nicht mehr als 8 Stunden gebracht wird.

4. Verfahren nach einem der vorhergehenden Ansprüche, bei welchem das vernetzbare elastomere Material
100 phr wenigstens eines vernetzbaren Elastomers,
20 bis 100 phr wenigstens eines Plastifizierungsöls,
20 bis 150 phr wenigstens eines verstärkenden Füllstoffs und
0 bis 80 phr wenigstens eines amorphen Polymers mit niedrigem Molekulargewicht aufweist.

5. Verfahren nach Anspruch 4, bei welchem das vernetzbare elastomere Material 0,3 bis 12 phr wenigstens eines organischen Peroxids aufweist.

6. Verfahren nach Anspruch 5, bei welchem das organische Peroxid eine Halbwertszeit von mehr als 5 Minuten bei 80°C hat.

7. Verfahren nach Anspruch 4, bei welchem das vernetzbare elastomere Material 0,1 bis 5 phr Schwefel (oder eine äquivalente Menge eines Schwefeldonators) und 2 bis 10 phr wenigstens eines Vulkanisierbeschleunigers aufweist.

8. Verfahren nach Anspruch 7, bei welchem der wenigstens eine Vulkanisierbeschleuniger aus Dithiocarbamaten, Thiuramen und Thiazolen ausgewählt wird.

9. Verfahren nach Anspruch 7 oder 8, bei welchem das vernetzbare elastomere Material weiterhin wenigstens einen Stickstoff enthaltenden Co-Beschleuniger in einer Menge von 0,25 bis 10 phr aufweist.

10. Verfahren nach einem der vorhergehenden Ansprüche, bei welchem das Befestigungselement (332) eine erste Schicht (332a), die aus einem ersten vernetzbaren elastomeren Material besteht, das Schwefel (oder einen Schwefeldonator) und keine Vulkanisierbeschleuniger enthält, und eine in Kontakt mit der ersten Schicht (332a) gebrachte zweite Schicht (332b) aufweist, die aus einem zweiten vernetzbaren elastomeren Material besteht, das wenigstens einen Beschleuniger und keinen Schwefel (oder Schwefeldonator) enthält.

11. Verfahren nach Anspruch 10, bei welchem das Aufbringen der Vorrichtung **dadurch** ausgeführt wird, dass die zweite Schicht (332b) in Kontakt mit der Innenfläche des fertiggestellten Reifens (11) angeordnet wird.

12. Bausatz zum Installieren einer Vorrichtung (3) zum Messen wenigstens eines charakteristischen Parameters eines Reifens (11) auf der Innenfläche eines fertiggestellten Reifens, wobei der Bausatz die Vorrichtung (3) und wenigstens ein Befestigungselement (332) aufweist, das ein vernetzbares elastomeres Material hat, das in der Lage ist, repositionierbar an der Innenfläche des fertiggestellten Reifens zu haften und die Vorrichtung (3) an der Innenfläche stabil festzulegen.

13. Bausatz nach Anspruch 12, bei welchem die Vorrichtung (3) einen Sensor (38, 39) aufweist, der an einem Substrat (331) installiert ist, wobei das Befestigungselement (332) mit dem Substrat (331) verbunden ist.

14. Bausatz nach Anspruch 13, bei welchem das Befestigungselement (332) mit dem Substrat (331) durch Klebung verbunden ist.

15. Bausatz nach Anspruch 13, bei welchem das Befestigungselement (332) mit dem Substrat (331) durch mechanische Mittel (337) verbunden ist.

16. Bausatz nach einem der Ansprüche 12 bis 15, bei welchem das vernetzbare elastomere Material auf einen Vernetzungsgrad von wenigstens 30% nach Erwärmen auf eine Temperatur von 40°C bis 90°C über einen Zeitraum von nicht mehr als 8 Stunden gebracht wird.

17. Bausatz nach einem der Ansprüche 12 bis 16, bei welchem das vernetzbare elastomere Material
100 phr wenigstens eines vernetzbaren Elastomers,
20 bis 100 phr wenigstens eines Plastifizierungsöls,
20 bis 150 phr wenigstens eines verstärkenden Füllstoffs und
0 bis 80 phr wenigstens eines amorphen Polymers mit niedrigem Molekulargewicht aufweist.

18. Bausatz nach Anspruch 17, bei welchem das vernetzbare elastomere Material 0,3 bis 12 phr wenigstens eines organischen Peroxids aufweist.

19. Bausatz nach Anspruch 18, bei welchem das organische Peroxid eine Halbwertszeit von mehr als 5 Minuten bei 80°C hat.

20. Bausatz nach Anspruch 17, bei welchem das vernetzbare elastomere Material 0,1 bis 5 phr Schwefel (oder eine äquivalente Menge eines Schwefeldonators) und 2 bis 10 phr wenigstens eines Vulkanisierbeschleunigers aufweist.

21. Bausatz nach Anspruch 20, bei welchem der wenigstens eine Vulkanisierbeschleuniger aus Dithiocarbamaten, Thiuramen und Thiazolen ausgewählt wird.

22. Bausatz nach Anspruch 20 oder 21, bei welchem das vernetzbare elastomere Material auch wenigstens einen Stickstoff enthaltenden Co-Beschleuniger in einer Menge von 0,25 bis 10 phr aufweist.

23. Bausatz nach einem der Ansprüche 17 bis 22, bei welchem das Befestigungselement (332) eine erste Schicht (332a), die aus einem ersten vernetzbaren elastomeren Material besteht, das Schwefel (oder einen Schwefeldonator) und keine Vulkanisierbeschleuniger enthält, und eine zweite Schicht (332b) aufweist, die aus einem zweiten vernetzbaren elastomeren Material besteht, das wenigstens einen Beschleuniger und keinen Schwefel (oder Schwefeldonator) aufweist, wobei die Schichten getrennt gehalten sind und zum Zeitpunkt der Installierung in Kontakt gebracht werden.

24. Bausatz nach Anspruch 23, bei welchem die zweite Schicht (332b) in Kontakt mit der Innenfläche des Reifens (11) zum Zeitpunkt der Installierung gebracht wird.

## Revendications

1. Procédé d'installation d'un dispositif (3), conçu pour mesurer au moins un paramètre caractéristique d'un pneu (11), dans un pneu fini (11) présentant une surface interne, lequel procédé comporte :
- le fait d'appliquer le dispositif dans une zone spécifiée de la surface interne du pneu fini, en interposant un élément fixateur (332) constitué d'un matériau élastomère réticulable, capable d'adhérer, mais de manière à pouvoir être repositionné, à la surface interne du pneu fini et de fixer de façon stable le dispositif (3) à ladite surface interne ;
- le fait de monter le pneu fini sur une jante (12) ;
- et le fait de faire tourner le pneu de manière à adapter la forme de l'élément fixateur (332) à la surface interne du pneu et à provoquer une réticulation au moins partielle du matériau élastomère réticulable.

2. Procédé conforme à la revendication 1, dans lequel le dispositif (3) est appliqué sur la surface interne du pneu (11), dans une zone de couronne.

3. Procédé conforme à l'une des revendications précédentes, dans lequel le matériau élastomère réticulable est amené à un degré de réticulation d'au moins 30 % après chauffage à une température de 40 à 90 °C durant un laps de temps d'au plus 8 heures.

4. Procédé conforme à l'une des revendications précédentes, dans lequel le matériau élastomère réticulable comprend :
- 100 pcpr (parties pour cent parties de résine) d'au moins un élastomère réticulable,
- de 20 à 100 pcpr d'au moins une huile plastifiante,
- de 20 à 150 pcpr d'au moins une charge renforçante,
- et de 0 à 80 pcpr d'au moins un polymère amorphe à faible masse moléculaire.

5. Procédé conforme à la revendication 4, dans lequel le matériau élastomère réticulable comprend de 0,3 à 12 pcpr d'au moins un peroxyde organique.

6. Procédé conforme à la revendication 5, dans lequel le peroxyde organique présente à 80°C un temps de demi-vie supérieur à 5 minutes.

7. Procédé conforme à la revendication 4, dans lequel le matériau élastomère réticulable comprend de 0,1 à 5 pcpr de soufre, ou une quantité équivalente d'un donneur de soufre, et de 2 à 10 pcpr d'au moins un accélérateur de vulcanisation.

8. Procédé conforme à la revendication 7, pour lequel ledit accélérateur de vulcanisation au nombre d'au moins un est choisi parmi les dithiocarbamates, les thiurames et les thiazoles.

9. Procédé conforme à la revendication 7 ou 8, dans lequel le matériau élastomère réticulable comprend en outre au moins un co-accélérateur azoté, en une proportion de 0,25 à 10 pcpr.

10. Procédé conforme à l'une des revendications précédentes, dans lequel l'élément fixateur (332) comporte une première couche (332a) constituée d'un premier matériau élastomère réticulable contenant du soufre ou un donneur de soufre et dépourvu d'accélérateurs de vulcanisation, et une deuxième couche (332b), mise en contact avec la première couche (332a) et constituée d'un deuxième matériau élastomère réticulable contenant au moins un accélérateur et dépourvu de soufre ou de donneurs de soufre.

11. Procédé conforme à la revendication 10, dans lequel on applique le dispositif en plaçant ladite deuxième couche (332b) en contact avec la surface interne du pneu fini (11).

12. Nécessaire permettant d'installer un dispositif (3), conçu pour mesurer au moins un paramètre caractéristique d'un pneu (11), sur la surface interne d'un pneu fini (11), lequel nécessaire comporte :
- le dispositif (3) ;
- et au moins un élément fixateur (332) constitué d'un matériau élastomère réticulable, capable d'adhérer, mais de manière à pouvoir être repositionné, à la surface interne du pneu fini et de fixer de façon stable le dispositif (3) à ladite surface interne.

13. Nécessaire conforme à la revendication 12, dans lequel le dispositif (3) comprend un capteur (38, 39) placé sur un substrat (331), auquel substrat (331) est associé ledit élément fixateur (332).

14. Nécessaire conforme à la revendication 13, dans lequel ledit élément fixateur (332) est associé audit substrat (331) par adhérence.

15. Nécessaire conforme à la revendication 13, dans lequel ledit élément fixateur (332) est associé audit substrat (331) par un moyen mécanique (337).

16. Nécessaire conforme à l'une des revendications 12 à 15, dans lequel le matériau élastomère réticulable est amené à un degré de réticulation d'au moins 30 % après chauffage à une température de 40 à 90 °C durant un laps de temps d'au plus 8 heures.

17. Nécessaire conforme à l'une des revendications 12 à 16, dans lequel le matériau élastomère réticulable comprend :
- 100 pcpr (parties pour cent parties de résine) d'au moins un élastomère réticulable,
- de 20 à 100 pcpr d'au moins une huile plastifiante,
- de 20 à 150 pcpr d'au moins une charge renforçante,
- et de 0 à 80 pcpr d'au moins un polymère amorphe à faible masse moléculaire.

18. Nécessaire conforme à la revendication 17, dans lequel le matériau élastomère réticulable comprend de 0,3 à 12 pcpr d'au moins un peroxyde organique.

19. Nécessaire conforme à la revendication 18, dans lequel le peroxyde organique présente à 80 °C un temps de demi-vie supérieur à 5 minutes.

20. Nécessaire conforme à la revendication 17, dans lequel le matériau élastomère réticulable comprend de 0,1 à 5 pcpr de soufre, ou une quantité équivalente d'un donneur de soufre, et de 2 à 10 pcpr d'au moins un accélérateur de vulcanisation.

21. Nécessaire conforme à la revendication 20, pour lequel ledit accélérateur de vulcanisation au nombre d'au moins un est choisi parmi les dithiocarbamates, les thiurames et les thiazoles.

22. Nécessaire conforme à la revendication 20 ou 21, dans lequel le matériau élastomère réticulable comprend en outre au moins un co-accélérateur azoté, en une proportion de 0,25 à 10 pcpr.

23. Nécessaire conforme à l'une des revendications 17 à 22, dans lequel l'élément fixateur (332) comporte une première couche (332a) constituée d'un premier matériau élastomère réticulable contenant du soufre ou un donneur de soufre et dépourvu d'accélérateurs de vulcanisation, et une deuxième couche (332b), constituée d'un deuxième matériau élastomère réticulable contenant au moins un accélérateur et dépourvu de soufre ou de donneurs de soufre, ces couches étant maintenues séparées et n'étant mises en contact qu'au moment de leur installation.

24. Nécessaire conforme à la revendication 23, dans lequel ladite deuxième couche (332b) est mise en contact avec la surface interne du pneu (11) au moment de son installation.
